# EUROPEAN PATENT APPLICATION

(11) **EP 4 737 963 A1**
(43) Date of publication of application: **06.05.2026**
(21) Application number: 25152952.5
(22) Date of filing: 20.01.2025
(51) Int. Cl.: G02B 6/293, G02B 6/42

(54) **OPTICAL SIGNAL CONVERTER**

(30) Priority: 30.10.2024 TW 113211812 U
(71) Applicant: Ezconn Corporation, New Taipei City 251 (TW)
(72) Inventor: WU, Chin-Tsung, New Taipei City (TW)
(74) Representative: Müller Schupfner & Partner Patent- und Rechtsanwaltspartnerschaft mbB (Muc)

(57) **Abstract**

An optical signal converter (1, 1a) includes a metal housing (10, 10a), a filter (20), a first fiber assembly (30) and a second fiber assembly (40). The metal housing includes a main ring part (11, 11a), a first mount ring part (12, 12a) and a second mount ring part (13), the first mount ring part is connected to one side of the main ring part, and the second mount ring part is welded to another side of the main ring part. The filter is disposed in the main ring part. The first fiber assembly is welded into the first mount ring part. The first fiber assembly is welded into the first mount ring part.

## Description

### Technical Field

The disclosure provides an optical signal converter.

### Background

In general, a 1-to-2 demultiplexer and a 2-to-1 multiplexer are mainly made of glass material, which has an advantage that the amount of adhesive and the position where the adhesive is applied can be confirmed during light coupling process. During the light coupling process, a large gap is needed between the glass parts to allow the optical power of output light to be adjusted to a desired value, and thus a thick adhesive is required to be applied into the gap. Since the adhesive has a large expansion and shrinkage rate as the temperature changes, it is easy to cause the displacements of the glass parts, causing the optical power of the output light to change. Moreover, the adhesive is easy to be damaged in high temperature and high humidity environments, causing the reliability issues. Therefore, how to solve the aforementioned issues are one of the topics in this field.

### SUMMARY

The disclosure provides an optical signal converter which is capable of solving the issue that the optical path derived from using glass parts and combining them by adhesive is easily changed due to environmental factors, causing the optical power of the output light does not meet the desired value.

One embodiment of the disclosure provides an optical signal converter. The optical signal converter includes a metal housing, a filter, a first fiber assembly and a second fiber assembly. The metal housing includes a main ring part, a first mount ring part and a second mount ring part, the first mount ring part is connected to one side of the main ring part, and the second mount ring part is welded to another side of the main ring part. The filter is disposed in the main ring part. The first fiber assembly is welded into the first mount ring part. The first fiber assembly is welded into the first mount ring part.

According to the optical signal converter as discussed in the above embodiment, the metal housing is applied, the first mount ring part is connected to the main ring part of the metal housing, the second mount ring part is welded to the main ring part of the metal housing, the first fiber assembly is welded into the first mount ring part of the metal housing, and the second fiber assembly is welded into the second mount ring part of the metal housing, which enables the relative positions among the main ring part, the first mount ring part, the second mount ring part, the first fiber assembly and the second fiber assembly to be difficult to be offset from one another due to environmental factors, thereby maintaining the optical power of the output light.

### BRIEF DESCRIPTION OF THE DRAWINGS

The present disclosure will become better understood from the detailed description given herein below and the accompanying drawings which are given by way of illustration only and thus are not intending to limit the present disclosure and wherein:
FIG. 1 is a perspective view of an optical signal converter according to a first embodiment of the disclosure;
FIG. 2 is an exploded view of the optical signal converter in FIG. 1;
FIG. 3 is a cross-sectional view of the optical signal converter in FIG. 1;
FIG. 4 is a cross-sectional view of the optical signal converter in FIG. 1 connected to another optical signal converter; and
FIG. 5 is a perspective view of an optical signal converter according to a second embodiment of the disclosure.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

In addition, the terms used in the present disclosure, such as technical and scientific terms, have its own meanings and can be comprehended by those skilled in the art, unless the terms are additionally defined in the present disclosure. That is, the terms used in the following paragraphs should be read on the meaning commonly used in the related fields and will not be overly explained, unless the terms have a specific meaning in the present disclosure.

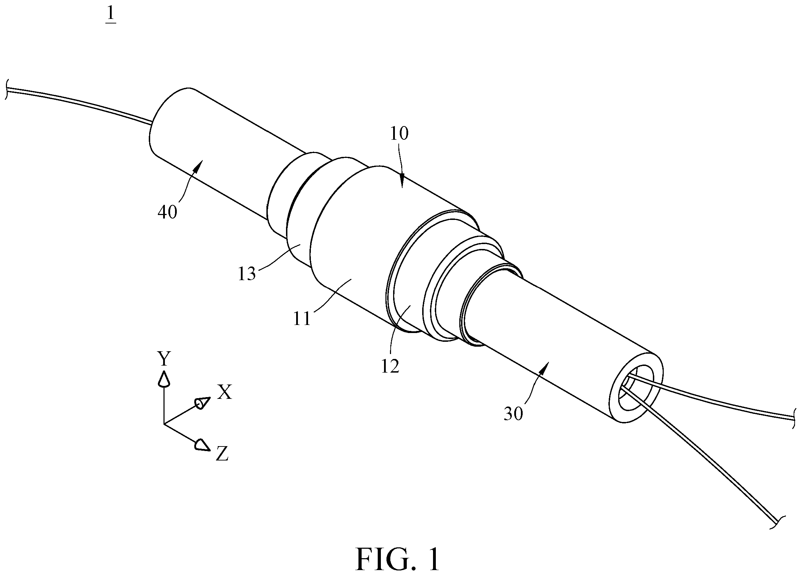

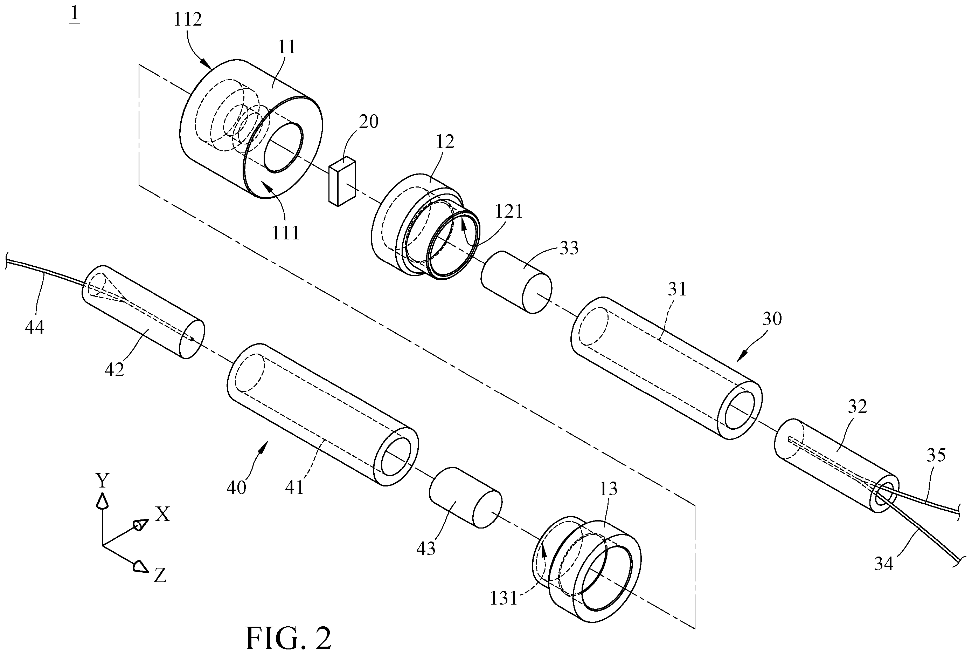

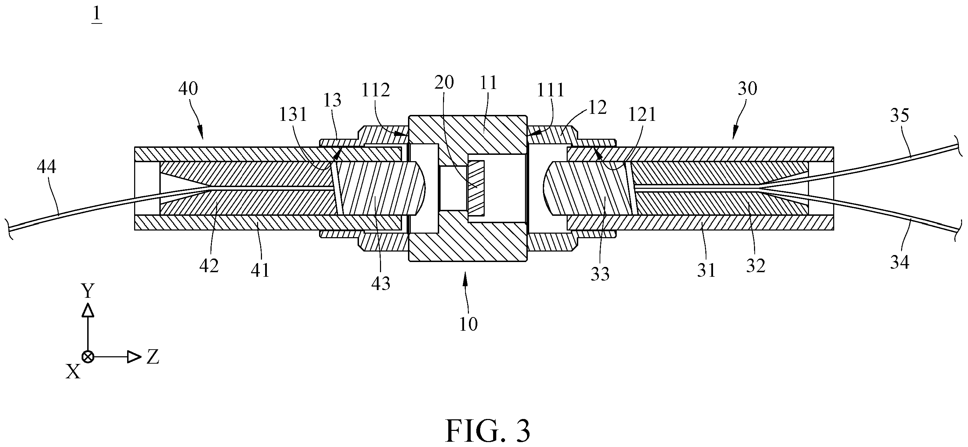

Referring to FIGS. 1 to 3, FIG. 1 is a perspective view of a optical signal converter according to a first embodiment of the disclosure, FIG. 2 is an exploded view of the optical signal converter in FIG. 1, and FIG. 3 is a cross-sectional view of the optical signal converter in FIG. 1.

In this embodiment, the optical signal converter 1 includes a metal housing 10, a filter 20, a first fiber assembly 30 and a second fiber assembly 40.

The metal housing 10 includes a main ring part 11, a first mount ring part 12 and a second mount ring part 13. The filter 20 is, for example, made of glass material. The filter 20 is disposed in the main ring part 11. The main ring part 11 has a first end surface 111 and a second end surface 112 axially located opposite to each other. The first mount ring part 12 and the second mount ring part 13 are respectively welded to the first end surface 111 and the second end surface 112 of the main ring part 11, for example, by laser. The first mount ring part 12 has a first inner annular surface 121, and the second mount ring part 13 has a second inner annular surface 131.

The first fiber assembly 30, for example but not limited to, includes a first casing 31, a first sleeve 32, a first lens 33 and two first fibers 34 and 35. The first casing 31 is made of metal material. The first mount ring part 12 is sleeved on the first casing 31, and the first casing 31 is welded to the first inner annular surface 121 of the first mount ring part 12, for example, by laser. The first sleeve 32 is, for example, made of glass material or ceramic material, and the first lens 33 is, for example, made of glass material. The first sleeve 32 and the first lens 33 are adhered in the first casing 31, and the first lens 33 is located closer to the filter 20 than the first sleeve 32. The first sleeve 32 and the first lens 33 are spaced apart from each other, and the first sleeve 32 and the first lens 33 correspond to each other with inclined surfaces. The first fibers 34 and 35 are partially embedded into the first sleeve 32.

The second fiber assembly 40, for example but not limited to, includes a second casing 41, a second sleeve 42, a second lens 43 and a second fiber 44. The second casing 41 is made of metal material. The second mount ring part 13 is sleeved on the second casing 41, and the second casing 41 is welded to the second inner annular surface 131 of the second mount ring part 13, for example, by laser. The second sleeve 42 is, for example, made of glass material or ceramic material, and the second lens 43 is, for example, made of glass material. The second sleeve 42 and the second lens 43 are adhered in the second casing 41, and the second lens 43 is located closer to the filter 20 than the second sleeve 42. The second sleeve 42 and the second lens 43 are spaced apart from each other, and the second sleeve 42 and the second lens 43 correspond to each other with inclined surfaces. The second fiber 44 is partially embedded into the second sleeve 42.

Next, the following paragraphs will introduce the assembly of the optical signal converter 1. Firstly, the first fibers 34 and 35 are inserted into the first sleeve 32, an adhesive is applied in the first sleeve 32 and is cured, and then an end surface of the first sleeve 32 is grinded. Then, the first sleeve 32 with the first fibers 34 and 35 and the first lens 33 are placed into the first casing 31, and the relative positions of the first sleeve 32 and the first lens 33 are adjusted along a direction parallel to Z axis for performing light coupling, such that light from the first fiber 34 is adjusted to be parallel to Z axis after passing through the first lens 33. Next, an adhesive is applied into the first casing 31 and is cured, such that the first sleeve 32 and the first lens 33 are fixed in the first casing 31. As a result, the assembly of the first fiber assembly 30 is finished. Similarly, the assembly of the second fiber assembly 40 is similar to that of the first fiber assembly 30, and thus will be repeatedly introduced hereinafter.

Next, the filter 20 is placed into the main ring part 11, and an adhesive is applied therein and is cured, such that the filter 20 is fixed in the main ring part 11. Then, light coupling is performed to the first fiber assembly 30 and the filter 20 in the main ring part 11. During the light coupling of the first fiber assembly 30 and the filter 20 in the main ring part 11, the first fiber assembly 30 can be horizontally moved relative to the filter 20 along a direction parallel to X axis, Y axis or Z axis, and can be rotated relative to the filter 20 about X axis or Y axis, such that after light passing through the first fiber 34 and the first lens 33 and adjusted to be parallel to Z axis is reflected back to the first lens 33 by the filter 20, the light enter into the first fiber 35. When the optical power of the light in the first fiber 35 reaches a predetermined value, the light coupling of the first fiber assembly 30 and the filter 20 is finished.

Next, the first mount ring part 12 is sleeved on the first fiber assembly 30, and the first mount ring part 12 is welded to the first end surface 111 of the main ring part 11, and then the first mount ring part 12 is welded to the first casing 31 of the first fiber assembly 30.

During the welding of the first mount ring part 12 and the first end surface 111 of the main ring part 11, three laser guns are, for example, used to applied laser rays on three spots spaced apart from each other by 120 degrees to preliminarily fix the first mount ring part 12 and the main ring part 11. Next, the first mount ring part 12 and the main ring part 11 are rotated, and then the three laser guns apply laser rays on other three spots to further fix the first mount ring part 12 and the main ring part 11. Similarly, the welding of the first mount ring part 12 and the first casing 31 of the first fiber assembly 30 is similar to that of the first mount ring part 12 and the first end surface 111 of the main ring part 11. However, the laser rays are required to penetrate through the first mount ring part 12, and thus the laser rays are required to be applied with higher energy during the welding of the first mount ring part 12 and the first casing 31 of the first fiber assembly 30.

During the aforementioned welding processes, if there are some minor relative displacements among the first mount ring part 12, the main ring part 11 and the first casing 31 to slightly affect the optical power of the light output from the first fiber 35, the laser rays may be additionally applied on other spots to slightly adjust the relative positions of the first mount ring part 12, the main ring part 11 and the first casing 31 for adjusting the optical power of the light output from the first fiber 35 to the predetermined value.

Next, the light coupling is performed to the second fiber assembly 40 and the filter 20 in the main ring part 11, and then the second mount ring part 13 is welded to the main ring part 11 and the second casing 41 of the second fiber assembly 40. As a result, the assembly of the optical signal converter 1 is finished. Similarly, the light coupling of the second fiber assembly 40 and the filter 20 and the welding of the second mount ring part 13, the main ring part 11 and the second casing 41 are similar to the light coupling of the first fiber assembly 30 and the filter 20 and the welding of the first mount ring part 12, the main ring part 11 and the first casing 31, and thus will not be repeatedly introduced.

In this embodiment, the optical signal converter 1 can be serves as a demultiplexer (i.e., Demux). For example, when light with wavelengths λ1 and λ2 reaches the filter 20 from the first fiber 34, the light is divided into light with wavelength λ1 and light with wavelength λ2 by the filter 20, the light with wavelength λ1 leaves through the first fiber 35, and the light with wavelength λ2 leaves through the second fiber 44. In another example, when light with wavelengths λ1, λ2, λ3 and λ4 reaches the filter 20 from the first fiber 34, the light is divided into light with wavelengths λ1 and λ2 and light with wavelengths λ3 and λ4 by the filter 20, the light with wavelengths λ1 and λ2 leaves through the first fiber 35, and the light with wavelengths λ3 and λ4 leaves through the second fiber 44

On the other hand, the optical signal converter 1 can be served as a multiplexer (i.e., Mux) For example, when light with wavelength λ1 reaches the filter 20 from the first fiber 35, and light with wavelength λ2 reaches the filter 20 from the second fiber 44, two kinds of light are combined into light with wavelengths λ1 and λ2 by the filter 20, and the light with wavelengths λ1 and λ2 leaves through the first fiber 34.

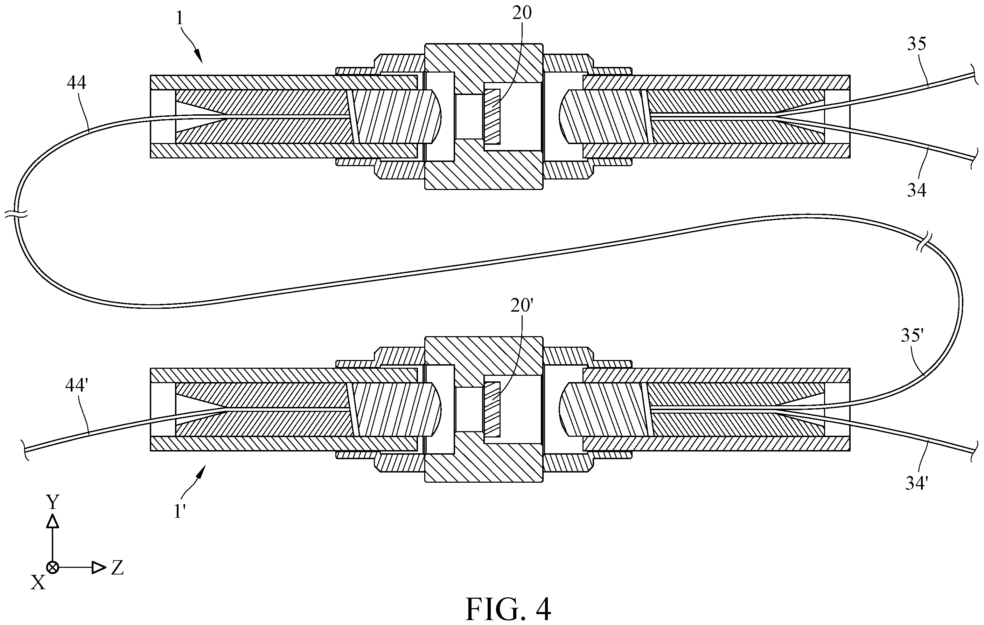

Then, referring to FIG. 4, FIG. 4 is a cross-sectional view of the optical signal converter in FIG. 1 connected to another optical signal converter. The optical signal converter 1 can be in series connection with another optical signal converter 1', where the structure of the optical signal converter 1' is, for example but not limited to, the same as that of the optical signal converter 1. For example, when light with wavelengths λ1, λ2, λ3, λ4, λ5 and λ6 reaches the filter 20 from the first fiber 34 of the optical signal converter 1, the light is divided into light with wavelengths λ1 and λ2 and light with wavelengths λ3, λ4, λ5 and λ6 by the filter 20. The light with wavelengths λ1 and λ2 leaves through the first fiber 35, and the light with wavelengths λ3, λ4, λ5 and λ6 enter into the first fiber 35' of the optical signal converter 1' through the second fiber 44. Then, when the light with wavelengths λ3, λ4, λ5 and λ6 reaches the filter 20' from the first fiber 35' of the optical signal converter 1', the light is divided into light with wavelengths λ3 and λ4 and light with wavelengths λ5 and λ6 by the filter 20', the light with wavelengths λ3 and λ4 leaves through the first fiber 34', and the light with wavelengths λ5 and λ6 leaves through the second fiber 44'.

In this embodiment, the metal housing 10 is applied, the first mount ring part 12 and the second mount ring part 13 are welded to the main ring part 11 of the metal housing 10, the first fiber assembly 30 is welded into the first mount ring part 12 of the metal housing 10, and the second fiber assembly 40 is welded into the second mount ring part 13 of the metal housing 10, which enables the relative positions among the main ring part 11, the first mount ring part 12, the second mount ring part 13, the first fiber assembly 30 and the second fiber assembly 40 to be difficult to be offset from one another due to environmental factors, thereby maintaining the optical power of the output light.

In this embodiment, the first mount ring part 12 and the second mount ring part 13 of the metal housing 10 are not restricted to being respectively welded to the first end surface 111 and the second end surface 112 of the main ring part 11. In some other embodiments, the main ring part may be sleeved on the first mount ring part and the second mount ring part, and the first mount ring part and the second mount ring part may be welded to an inner surface of the main ring part 11.

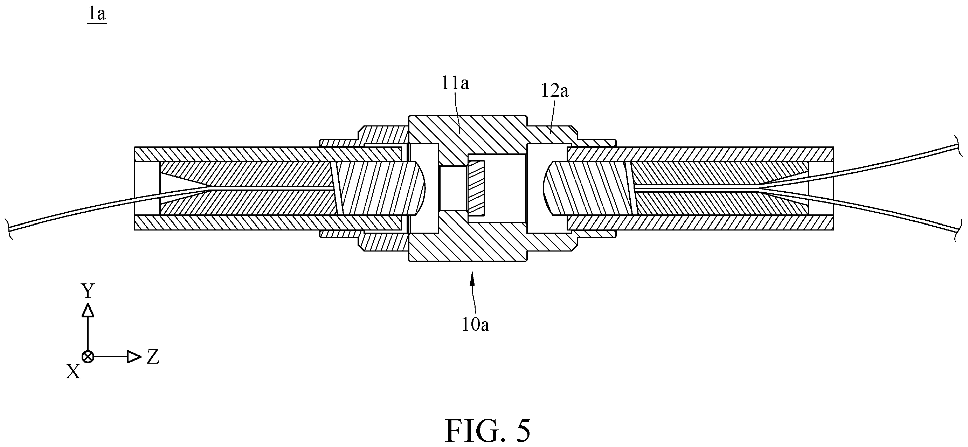

Note that the first mount ring part 12 of the metal housing 10 is not restricted to being welded to the main ring part 11. Referring to FIG. 5, FIG. 5 is a perspective view of an optical signal converter according to a second embodiment of the disclosure.

The optical signal converter 1a of this embodiment is similar to the optical signal converter 1 of the previous embodiment, the main difference between them is the structure of the metal housing. Therefore, the following paragraph mainly introduces a metal housing 10a of the optical signal converter 1a of this embodiment while other parts of the optical signal converter 1a will not be repeatedly introduced hereinafter.

In this embodiment, a first mount ring part 12a of the metal housing 10a is integrally connected to one side of a main ring part 11a; that is, the first mount ring part 12a and the main ring part 11a of the metal housing 10a are made of a single piece.

According to the optical signal converter as discussed in the above embodiment, the metal housing is applied, the first mount ring part is connected to the main ring part of the metal housing, the second mount ring part is welded to the main ring part of the metal housing, the first fiber assembly is welded into the first mount ring part of the metal housing, and the second fiber assembly is welded into the second mount ring part of the metal housing, which enables the relative positions among the main ring part, the first mount ring part, the second mount ring part, the first fiber assembly and the second fiber assembly to be difficult to be offset from one another due to environmental factors, thereby maintaining the optical power of the output light.

In addition, during the welding processes, if there are some minor relative displacements among the main ring part, the first mount ring part, the second mount ring part, the first fiber assembly and the second fiber assembly to slightly affect the optical power of the output light, the laser ray may be additionally applied on other spots to slightly adjust the relative positions of the main ring part, the first mount ring part, the second mount ring part, the first fiber assembly and the second fiber assembly for adjusting the optical power of the output light to the predetermined value.

It will be apparent to those skilled in the art that various modifications and variations can be made to the present disclosure. It is intended that the specification and examples be considered as exemplary embodiments only, with a scope of the disclosure being indicated by the following claims and their equivalents.

## Claims

1. An optical signal converter (1, 1a), comprising:
a metal housing (10, 10a), comprising a main ring part (11, 11a), a first mount ring part (12, 12a) and a second mount ring part (13), wherein the first mount ring part is connected to one side of the main ring part, and the second mount ring part is welded to another side of the main ring part;
a filter (20), disposed in the main ring part;
a first fiber assembly (30), welded into the first mount ring part; and
a second fiber assembly (40), welded into the second mount ring part.

2. The optical signal converter (1) according to claim 1, wherein the first mount ring part (12) is welded to one side of the main ring part (11).

3. The optical signal converter according to claim 2, wherein the main ring part has a first end surface (111) and a second end surface (112) axially located opposite to each other, the first mount ring part and the second mount ring part are respectively welded to the first end surface and the second end surface.

4. The optical signal converter (1a) according to claim 1, wherein the first mount ring part (12a) is integrally connected to one side of the main ring part (11a).

5. The optical signal converter according to claim 1, wherein the first mount ring part has a first inner annular surface (121), the first mount ring part is sleeved on the first fiber assembly, the first fiber assembly is welded to the first inner annular surface, the second mount ring part has a second inner annular surface (131), the second mount ring part is sleeved on the second fiber assembly, and the second fiber assembly is welded to the second inner annular surface.

6. The optical signal converter according to claim 1, wherein the first fiber assembly comprises a first casing (31), a first sleeve (32), a first lens (33) and two first fibers (34, 35), the first casing is welded into the first mount ring part, the first sleeve and the first lens are located in the first casing, the first lens is located closer to the filter than the first sleeve, and the two first fibers are partially embedded into the first sleeve.

7. The optical signal converter according to claim 6, wherein the second fiber assembly comprises a second casing (41), a second sleeve (42), a second lens (43) and a second fiber (44), the second casing is welded into the second mount ring part, the second sleeve and the second lens are located in the second casing, the second lens is located closer to the filter than the second sleeve, and the second fiber is partially embedded into the second sleeve.

8. The optical signal converter according to claim 7, wherein the first sleeve and the first lens are adhered in the first casing, and the second sleeve and the second lens are adhered in the second casing.

9. The optical signal converter according to claim 7, wherein the first sleeve and the first lens are spaced apart from each other, and the second sleeve and the second lens are spaced apart from each other.

10. The optical signal converter according to claim 7, wherein the first sleeve and the first lens correspond to each other with inclined surfaces, and the second sleeve and the second lens correspond to each other with inclined surfaces.
